(19) Europäisches Patentamt
European Patent Office
Office européen des brevets

(11) **EP 4 372 959 A1**

(12) **EUROPEAN PATENT APPLICATION**
published in accordance with Art. 153(4) EPC

(43) Date of publication:
**22.05.2024 Bulletin 2024/21**

(51) International Patent Classification (IPC):
***H02J 7/00*** *(2006.01)*     ***H01M 50/284*** *(2021.01)*

(21) Application number: **23772399.4**

(22) Date of filing: **26.09.2023**

(86) International application number:
**PCT/KR2023/014835**

(87) International publication number:
**WO 2024/072003 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 KR 20220125752**
**06.12.2022 KR 20220169018**

(71) Applicant: **Samsung Electronics Co., Ltd.**
**Suwon-si, Gyeonggi-do 16677 (KR)**

(72) Inventor: **LEE, Kyunghwan**
**Suwon-si, Gyeonggi-do 16677 (KR)**

(74) Representative: **Gulde & Partner**
**Patent- und Rechtsanwaltskanzlei mbB**
**Wallstraße 58/59**
**10179 Berlin (DE)**

(54) **ELECTRONIC DEVICE COMPRISING PLURALITY OF BATTERIES, AND OPERATING METHOD THEREOF**

(57) An electronic device (201, 301, 302) according to an embodiment may include a first battery (281), a second battery (282), a charging circuit (380, 381) configured to supply power to the first battery through a first path and supply power to the second battery through a second path, and a processor (220). According to an embodiment, the processor may be configured to control the charging circuit to generate a current corresponding to a sum of a first threshold current of the first battery and a second threshold current of the second battery based on power received from a power transmitter (305). According to an embodiment, the processor may be configured to, based on the current, control the charging circuit to supply a first current to the first battery through a first path and a second current to the second battery through a second path. According to an embodiment, the processor may be configured to identify the second current supplied to the second battery through the second path. According to an embodiment, the processor may be configured to, based on identifying that the second current exceeds the second threshold current, control the charging circuit so as to reduce the magnitude of the second current supplied to the second battery. In addition, various embodiments are possible.

FIG. 3A

**EP 4 372 959 A1**

**Description**

[Technical Field]

Embodiments of the disclosure relate to an electronic device including multiple batteries and an operating method thereof.

[Background Art]

Recently, the use of easily portable electronic devices such as smart phones, tablet PCs, wearable devices, AR glasses, and the like is increasing, and as the use of electronic devices rapidly increases, research into batteries for extending use time is being actively conducted. Such an electronic device may be configured to use multiple batteries in order to stably receive more quantity of power.

[Detailed Description of the Invention]

[Technical Solution]

An electronic device according to an embodiment includes a first battery, a second battery, a charging circuit configured to supply power to the first battery through a first path and supply power to the second battery through a second path, and a processor. According to an embodiment, the processor may be configured to control the charging circuit to generate a current corresponding to a sum of a first threshold current of the first battery and a second threshold current of the second battery based on power received from a power transmitter. According to an embodiment, the processor is configured to, based on the current, control the charging circuit to supply a first current to the first battery through a first path and a second current to the second battery through a second path. According to an embodiment, the processor is configured to identify the second current supplied to the second battery through the second path. According to an embodiment, the processor is configured to, based on identifying that the second current exceeds the second threshold current, control the charging circuit so as to reduce the magnitude of the second current supplied to the second battery.

A method for operating an electronic device including a first battery and a second battery according to an embodiment includes controlling a charging circuit included in the electronic device so as to generate a current corresponding to a sum of a first threshold current of the first battery and a second threshold current of the second battery based on power received from a power transmitter. A method for operating the electronic device according to an embodiment includes controlling the charging circuit to supply, based on the current, a first current to the first battery through a first path and a second current to the second battery through a second path. The method for operating the electronic device according to an embodiment includes identifying the second current supplied to the second battery by using a resistor disposed on the second path. The method for operating the electronic device according to an embodiment may include controlling the charging circuit so as to reduce the magnitude of the second current supplied to the second battery based on identifying that the second current exceeds the second threshold current.

An electronic device according to an embodiment includes a first battery, a second battery, a charging circuit configured to supply power to the first battery through a first path and supply power to the second battery through a second path, and a processor. The processor according to an embodiment may be configured to control the charging circuit to generate a current corresponding to a sum of a first threshold current of the first battery and a second threshold current of the second battery based on power received from a power transmitter. The processor according to an embodiment is configured to control the charging circuit to supply power of a first current to the first battery through a first path and supply power of a second current to the second battery through a second path. The processor according to an embodiment is configured to identify the second current supplied to the second battery through the second path. The processor according to an embodiment is configured to, based on identifying that the second current supplied to the second battery exceeds the second threshold current, control the charging circuit or the power transmitter so as to reduce the magnitude of the current supplied to the charging circuit.

[Brief Description of Drawings]

FIG. 1 is a block diagram of an electronic device in a network environment, according to an embodiment;
FIG. 2 is a block diagram illustrating a schematic configuration of an electronic device according to an embodiment;
FIG. 3A illustrates an operation of controlling a current supplied to a second battery by an electronic device according to an embodiment;

FIG. 3B illustrates an operation of controlling a current supplied to a second battery by an electronic device according to an embodiment;

FIG. 3C illustrates an operation of controlling a current supplied to a second battery by an electronic device according to an embodiment;

FIG. 3D illustrates an operation of controlling a current supplied to a second battery by an electronic device according to an embodiment;

FIG. 4 illustrates an operation of controlling a current supplied to a second battery by a charging circuit according to an embodiment;

FIGS. 5A and 5B illustrate a method for controlling multiple elements disposed on a path for supplying power to a second battery according to an embodiment;

FIG. 6 is a flowchart illustrating a method for controlling a current supplied to a second battery by an electronic device according to an embodiment;

FIG. 7 is a flowchart illustrating a method for controlling a current supplied to a second battery by an electronic device according to an embodiment;

FIG. 8 is a flowchart illustrating a method for controlling a current supplied to a second battery by a processor according to an embodiment;

FIG. 9 is a flowchart illustrating a method for controlling a current supplied to a second battery by a processor according to an embodiment; and

FIG. 10 is a flowchart illustrating a method for controlling a current supplied to a second battery by a processor according to an embodiment.

[Mode for Carrying out the Invention]

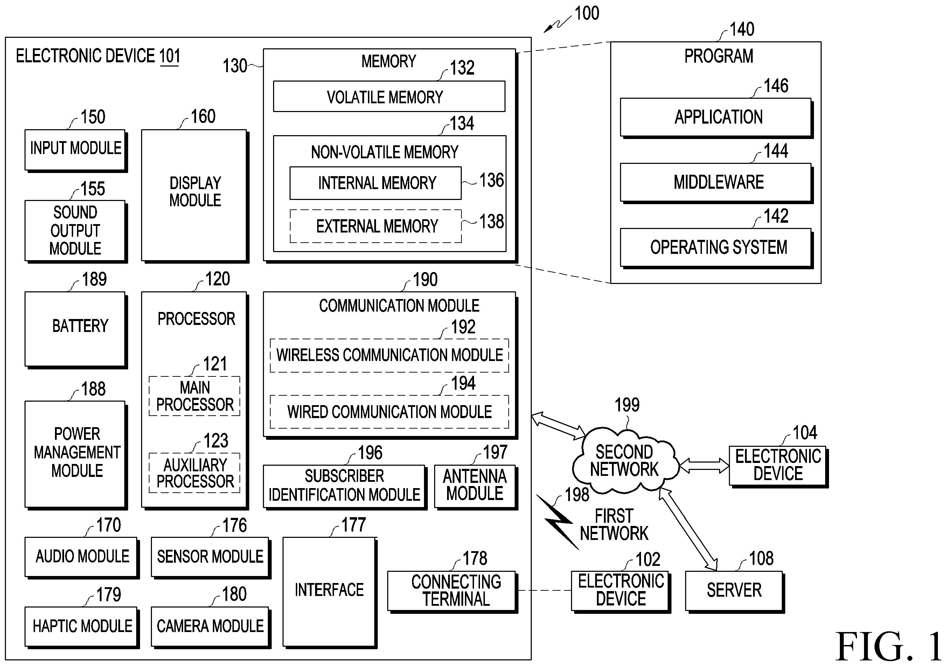

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

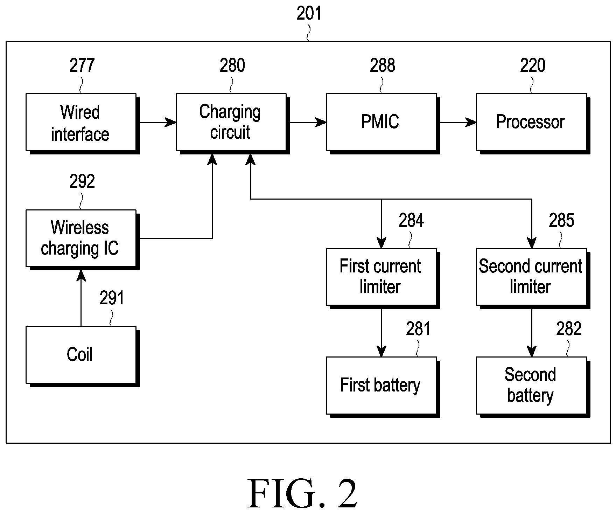

FIG. 2 is a block diagram illustrating a schematic configuration of an electronic device according to an embodiment.

Referring to FIG. 2, an electronic device 201 according to an embodiment may include a processor 220, a wired interface 277, a charging circuit 280, a first battery 281, a second battery 282, a first current limiter 284, a second current limiter 285, a PMIC 288, a coil 291, and/or a wireless charging IC 292. The electronic device 201 according to an embodiment is not limited thereto, and may further include various elements or may be configured without some of the elements. The electronic device 201 according to an embodiment may further include all or part of the electronic device 101 shown in FIG. 1.

The wired interface 277 according to an embodiment may include a connection unit (e.g., a USB port) capable of connecting to a power transmitter (travel adapter (TA)) that supplies power by wire. For example, the wired interface 277 may include a power delivery (PD) integrated circuit (IC) for receiving power by wire.

The charging circuit 280 according to an embodiment may perform a charge operation for the first battery 281 and/or the second battery 282 based on power being supplied through the wired interface 277 or the wireless charging IC 292. The charging circuit 280 may perform a discharging operation for the first battery 281 and/or the second battery 282 based on that power is not supplied through the wired interface 277.

The charging circuit 280 according to an embodiment may convert power supplied through the wired interface 277 or the wireless charging IC 292 into a form required for the first battery 281 and/or the second battery 282. The charging circuit 280 may provide the converted power to the first battery 281 and/or the second battery 282. For example, the charging circuit 280 may support high-speed charging. The charging circuit 280 may include at least one of a direct charger, a switched capacitor voltage converter, or a switched capacitor voltage divider.

According to an embodiment, the charging circuit 280 may provide power supplied from the first battery 281 or the second battery 282 to elements included in the electronic device 201. In addition, the charging circuit 280 may convert power supplied from the outside and then provide the converted power to elements included in the electronic device 201.

According to an embodiment, the charging circuit 280 may generate a current corresponding to the sum of a first threshold current of the first battery 281 and a second threshold current of the second battery 282 based on the power received from an external power transmitter.

According to an embodiment, the charging circuit 280 may supply power of the first current to the first battery 281 through a first path based on the generated current. The charging circuit 280 may supply power of the second current to the second battery 282 through a second path based on the generated current. For example, the generated current may be divided into a first current and a second current.

According to an embodiment, the charging circuit 280 may identify or monitor the second current supplied to the second battery 282 by using a resistor disposed on the second path. The charging circuit 280 may reduce the magnitude of the second current when the second current exceeds the second threshold current of the second battery 282. Accordingly, the electronic device 201 may adjust (or decrease) the magnitude of the second current through the charging circuit 280 even if the second current limiter 285 does not perform a function of limiting the second current. Thus, when it is recognized that the charging current of the first battery 281 is too large, the power supplied by the charging circuit to the second battery is reduced. The current limitation is therefore not performed by second current limiter 285, which is directly connected to the second battery 282, but by the charging circuit 280. This makes it possible for the charging circuit 280 not to release excess energy that would then have to be converted into heat elsewhere in the device.

The first battery 281 and the second battery 282 according to an embodiment may include a battery pack in which battery cells are formed as a single pack. For example, a battery pack may be a product including a housing in which battery cells are stored.

According to an embodiment, the electronic device 201 may be implemented as a foldable electronic device including a flexible display. The electronic device 201 may include a first housing and a second housing connected to each other by a hinge. The electronic device 201 may be folded or unfolded by a hinge. The first battery 281 may be disposed in the first housing, and the second battery 282 may be disposed in the second housing. The first battery 281 may be connected to the second battery 282 through a flexible printed circuit board (FPCB).

Each of the first battery 281 and the second battery 282 according to an embodiment may be charged based on power provided from the charging circuit 280. In addition, each of the first battery 281 and the second battery 282 may be discharged by providing the charged power to elements of the electronic device 201. For example, each of the first battery 281 and the second battery 282 may have the same or different charging capacities. In addition, each of the first battery 281 and the second battery 282 may have the same or different allowable current. For example, the first battery 281 may be a main battery and the second battery 282 may be a sub battery.

The first current limiter 284 according to an embodiment may be disposed between the first battery 281 and the charging circuit 280. The first current limiter 284 may limit flow of current provided to the first battery 281. For example, the first current limiter 284 may reduce the magnitude of the first current when the first current supplied to the first battery 281 exceeds the first threshold current of the first battery 281. For example, the processor 220 may be configured to reduce the magnitude of the first current by increasing resistance of multiple field effect transistors (FETs) (e.g., two N-type FETs disposed in different directions) included in the first current limiter 284. For example, the first current limiter 284 may include a gate driver for controlling multiple FETs. The processor 220 may be configured to increase or decrease resistance of the multiple FETs through a gate driver.

The second current limiter 285 according to an embodiment may be disposed between the second battery 282 and the charging circuit 280. For example, the second current limiter 285 may include a gate driver for controlling multiple FETs. The processor 220 may be configured to fully turn on multiple field effect transistors (FETs) (e.g., two N-type FETs disposed in different directions) included in the second current limiter 285. According to an embodiment, the second current limiter 285 may not perform a current control function.

The electronic device 201 according to an embodiment may include multiple FETs disposed in different directions instead of the second current limiter 285. The multiple FETs may be disposed between the charging circuit 280 and the second battery 282. The electronic device 201 may further include a control circuit for controlling the multiple FETs. The processor 201 may be configured to control on/off of the multiple FETs through a control circuit.

A power management integrated circuit (PMIC) 288 according to an embodiment may manage power of the electronic device 201. The PMIC 288 may control normal legacy charging and fast charging operations. For example, the PMIC 288 may provide power received from the charging circuit 280 to elements (e.g., the processor 220) of the electronic device 201. According to an embodiment, at least some of the functions of the PMIC 288 may be performed by the processor 220.

The processor 220 (e.g., an application processor (AP)) according to an embodiment may be configured to control overall operations of the electronic device 201. For example, the processor 220 may be implemented in the same manner as or similarly to the processor 120 of FIG. 1.

According to an embodiment, when it is identified that the second current supplied to the second battery 282 exceeds the second threshold current of the second battery 282, the processor 220 may be configured to control a power transmitter that transmits power from the outside so as to reduce the magnitude of the second current to the second threshold current or less. For example, when the magnitude of the second current is reduced due to the increase in internal resistance of the charging circuit 280, heat generation of the charging circuit 280 may increase. Accordingly, the processor 220 may be configured to reduce the magnitude of power provided from the power transmitter. For example, when the magnitude of a current supplied from the power transmitter to the charging circuit 280 is smaller than a designated magnitude (e.g., 1A), the processor 220 may be configured to transmit a message indicating to reduce the magnitude of the voltage, which is supplied from the power transmitter to the charging circuit 280, to a power delivery circuit (or PD IC) included in the wired interface 277. Alternatively, when the magnitude of a current supplied from the power transmitter to the charging circuit 280 is equal to or greater than a designated magnitude (e.g., 1A), the processor 220 may be configured to transmit a message indicating to reduce the magnitude of the voltage, which is supplied from the power transmitter to the charging circuit 280, to a power delivery circuit (or PD IC) included in the wired interface 277. The power delivery circuit (or PD IC) may reduce the magnitude of the current or voltage provided from the power transmitter based on the received message. For example, the message may include a command to reduce the magnitude of the current or voltage provided by the power transmitter.

According to an embodiment, the processor 220 may be configured to reduce the magnitude of the second current supplied to the second battery 282 by reducing the magnitude of the power provided from the power transmitter without the charging circuit 280. The processor 220 may be configured to identify the second current supplied to the second battery 282. When the second current supplied to the second battery 282 exceeds the second threshold current of the second battery 282, the processor 220 may be configured to control the charging circuit 280 or an external power transmitter so as to reduce the magnitude of a current supplied to the charging circuit 282. For example, when it is identified that the second current supplied to the second battery 282 exceeds the second threshold current of the second battery 282, the processor 220 may be configured to provide information on the second current so as to reduce the magnitude of the current generated by the charging circuit 282. Alternatively, when it is identified that the second current supplied to the second battery 282 exceeds the second threshold current of the second battery 282, the processor 220 may be configured to transmit a message to the power delivery circuit (or PD IC) so as to reduce the magnitude of the current supplied by the power transmitter.

The coil 291 according to an embodiment may receive an AC current induced between external wireless power transmission devices. The wireless charging IC 292 may generate power using the AC current received by the coil 291 and provide the power to the charging circuit 280.

The charging circuit 280 according to an embodiment may perform a charging operation for the first battery 281 and/or the second battery 282 based on the power supplied through the wired interface 277 and/or the power supplied from the wireless charging IC 292.

The electronic device 201 according to an embodiment may further include a memory (not shown) and/or a communication module (not shown).

A memory (not shown) according to an embodiment may store a program (for example, the program 140 of FIG. 1) used for operation of controlling charging/discharging of each of the first battery 281 and the second battery 282 and store various pieces of data generated during execution of the program 140. For example, the memory (not shown) may be implemented in the same manner as or similarly to the memory 130 of FIG. 1.

A communication module (not shown) according to an embodiment may perform communication under the control of the processor 220. For example, the communication module (not shown) may perform communication for power reception with a power transmitter (e.g., a wired power transmission device or a wireless power transmission device) under the control of the processor 220. For example, the communication module (not shown) may be implemented the same manner as or similarly to the communication module 190 of FIG. 1.

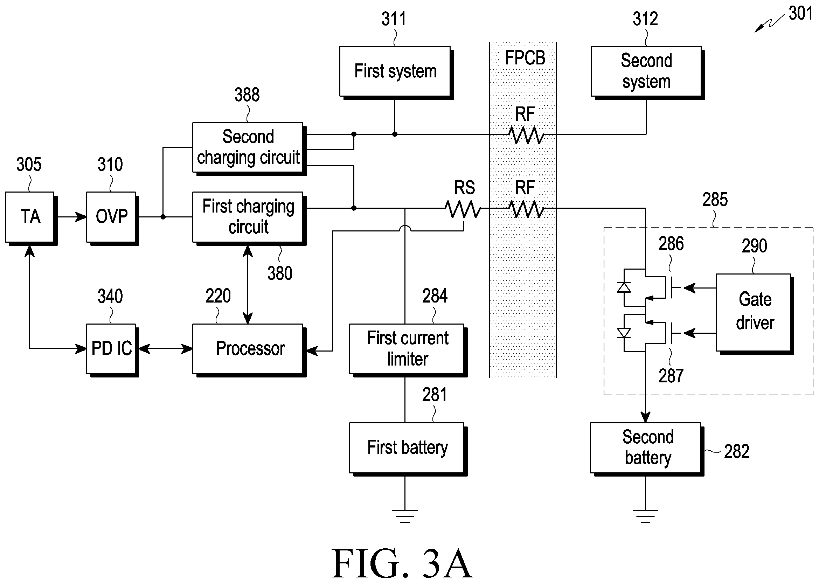

A conventional electronic device may not include a resistor RS on a second path in an electronic device 301 of FIG. 3A. Here, a voltage across both ends of the first current limiter 284 may be a difference between a battery voltage (VBAT0) output from the first charging circuit 380 and a voltage (VBAT1) applied to the first battery 281. For example, the voltage across both ends of the first current limiter 284 may be determined by Equation 1 below. For example, 'R1' may be a resistor corresponding to the first current limiter 284. 'I1' may be a first current supplied to the first battery 281. 'R2' may be a resistance of the second current limiter 285. 'I2' may be a second current supplied to the second battery 282. RF may be resistance by the FPCB.

[Equation 1]

$$\text{Voltage across both ends of first current limiter} = VBAT0 - VBAT1 = R1 * I1 \approx (R2 + RF) * I2$$

As shown in Equation 1 above, the voltage across both ends of the first current limiter 284 may increase according to RF and R2. For example, heat generation may occur as RF and R2 increase. In order to solve this problem, R2 may be decreased by fully turning on multiple FETs included in the second current limiter. However, when considering an error rate of a current conducted through the second current limiter 285, the second current exceeding the second threshold current may be supplied to the second battery 282.

For example, the maximum value of the second current that may be supplied to the second battery 282 may be determined by Equation 2 below.

For example, IBAT0,max may be the maximum value of a current generated by the first charging circuit 380. IBAT1,max may be the maximum value of a first current supplied to the first battery 281. IBAT2,max may be a second threshold current of the second battery 282.

【Equation 2】

$$\text{Maximum value of second battery current} = IBAT0,max - (IBAT1,max/1.05) * 0.95 \approx (IBAT,max - IBAT,max) + 0.095 * IBAT1,max = IBAT2,maw + 0.095 * IBAT1,max$$

According to Equation 2, the maximum value of current that may be supplied to the second battery is obtained as IBAT2,max+0.095*IBATl,max, and thus may be greater than a second threshold current (IBAT2,max) of the second battery.

As described above, the conventional electronic device may be configured to, when considering an error rate of the second current limiter, configure the current generated by the first charging circuit 380 to have a low magnitude so that the second current exceeds the second threshold current. However, when the magnitude of the current generated by the first charging circuit 380 is configured to be low, the conventional electronic device is unable to supply as much current as the corresponding threshold currents of the first battery 281 and the second battery 282 to the first battery 281 and the second battery 282, respectively. Accordingly, charging efficiency of the first battery 281 and the second battery 282 may decrease.

In the electronic devices 201, 301, 302, 303, and 304 according to an embodiment, the first charging circuits 280, 380, and 381 each may supply as much current as the corresponding threshold currents of the first and second batteries to the first battery 281 and the second battery 282, respectively. In addition, the electronic devices 201, 301, 302, 303, and 304 may be configured to adjust (or decrease) the magnitude of the second current supplied to the second battery 282 through the charging circuits 280, 380, 381 and/or the processor 220. Accordingly, the electronic devices 201, 301, 302, 303, and 304 may minimize heat generation and increase charging efficiency.

FIG. 3A illustrates an operation of controlling a current supplied to a second battery by an electronic device according to an embodiment.

Referring to FIG. 3A, an electronic device 301 according to an embodiment may include an OVP 310, a first system 311, a second system 312, a processor 220, and a first charging circuit 380, a second charging circuit 388, a first battery 281, a second battery 282, a first current limiter 284, and a second current limiter 285. For example, the processor 220, the first battery 281, the second battery 282, the first current limiter 284, and the second current limiter 285 may be implemented in the same manner as the processor 220, the first battery 281, the second battery 282, the first current limiter 284, and the second current limiter 285 described in FIG. 2. Depending on implementation, the charging circuit 280 described in FIG. 2 may include a first charging circuit 380 and a second charging circuit 388.

According to an embodiment, the OVP 310 may perform a function of protecting the charging circuit 280 from power supplied from an external power transmitter (e.g., a travel adapter (TA)) 305. For example, the OVP 310 may perform an overvoltage protection function. For example, the OVP 310 may cut off power having a voltage greater than a designated voltage.

According to an embodiment, the second charging circuit 388 may provide power supplied from an external power transmitter 305 to the first system 311 and the second system 312. Alternatively, the second charging circuit 388 may provide power stored in the first battery 281 and the second battery 282 to the first system 311 and the second system 312. For example, the first system 311 and the second system 312 may refer to elements of the electronic device 301. For example, the first charging circuit 380 may include at least one of a direct charger, a switched capacitor voltage converter, or a switched capacitor voltage divider. For example, the second charging circuit 388 may be implemented as a charger circuit (e.g., a DC/DC converter, a buck converter, a buck booster, or a buck boost/converter).

According to an embodiment, the electronic device 301 may be implemented as a foldable electronic device including a flexible display. The electronic device 301 may be folded or unfolded by a hinge. The electronic device 201 may include a first housing and a second housing connected to each other by a hinge. The first battery 281 and the first system 311 may be disposed in the first housing, and the second battery 282 and the second system 312 may be disposed in the second housing. The first battery 281 and the first system 311 may be connected to the second battery 282 and the second system 312 through a flexible printed circuit board (FPCB). For example, a second path through which power is supplied from the first charging circuit 380 and/or the second charging circuit 388 to the second battery 282 may include a resistance (RF) by the FPCB.

According to an embodiment, the second current limiter 285 may include multiple FETs 286 and 287 and a gate driver 290. The multiple FETs 286 and 287 may be implemented as N-type FETs arranged in different directions. The gate driver 290 may fully turn on the multiple FETs 286 and 287 under the control of the processor 220. Accordingly, the second current limiter 285 may not perform a function of limiting the second current supplied to the second battery 282. However, upon determining an abnormal operation, the second current limiter 285 may perform a function of limiting the second current. In other words, the gate driver 290 may be controlled by the processor 220 to either switch on or to switch off a function of the second current limiter 285 of limiting the second current supplied to the second battery 282. For this purpose, the gate driver 290 may turn of FET 286 and/or FET 287.

According to an embodiment, the first charging circuit 380 may receive power from an external power transmitter 305 through the OVP 310. The first charging circuit 380 may generate power for charging the first battery 281 and the second battery 282 based on the received power. The first charging circuit 380 may be configured to generate a current having the magnitude corresponding to the sum of a first threshold current representing the maximum allowable current that may be supplied to the first battery 281 and a second threshold current representing the maximum allowable current that may be supplied to the second battery 282. Thus, the power supplied by the first charging circuit 380 may be optimized in a way that both the first battery 281 as well as the second battery 282 may be charged with the maximum allowable current, respectively, while at the same time limiting the power supplied by the first charging circuit 380 to a minimum. Hence, power loss and heating of the device and/or the external power transmitter 305 can be minimized. The first charging circuit 380 may be configured to supply power of a first current to the first battery 281 through a first path and supplies power of a second current to the second battery 282 through a second path, based on the generated current.

According to an embodiment, the processor 220 may be configured to identify the second current (or the magnitude of the second current) supplied to the second battery 282 by using a resistor (RS) included in the second path. The processor 220 may be configured to compare the second threshold current and the second current (or the magnitude of the second current). When the second current exceeds the second threshold current of the second battery 282, the processor 220 may be configured to control the first charging circuit 380 so as to reduce the magnitude of the second current. For example, the first charging circuit 380 may reduce the magnitude of the second current provided from the charging circuit 280 to the second battery 282 by increasing internal resistance of the first charging circuit 380. Accordingly, the electronic device 301 may be configured to adjust (or decrease) the magnitude of the second current through the first charging circuit 380 even if the second current limiter 285 does not perform a function of limiting the second current, for example by controlling the FETs 286 and 287 to be fully turned on by the gate driver 290. According to various embodiments, the method of identifying the second current (or the magnitude of the second current) supplied to the second battery 282 is not limited to an example of the method of identifying the second current by using a resistor (RS) included in the second path, and may include identifying the second current (or the magnitude of the second current) supplied to the second battery 282 by further including various elements.

According to another embodiment, the processor 220 may be configured to identify that the second current supplied to the second battery 282 exceeds the second threshold current of the second battery 282, through the first charging circuit 380. Alternatively, the processor 220 may be configured to identify that the magnitude of the second current is reduced to the second threshold current or less, through the first charging circuit 280.

According to an embodiment, when it is identified that the second current supplied to the second battery 282 exceeds the second threshold current of the second battery 282, the processor 220 may be configured to transmit, to the PD IC 340, a message instructing to reduce the magnitude of current supplied from the power transmitter 305 to the charging circuit 280. The PD IC 340 may control the power transmitter 305 to reduce the magnitude of current or voltage, which is provided by the power transmitter 305 to the charging circuit 280, based on the received message. Accordingly, the electronic device 301 may be configured to adjust (or decrease) the magnitude of the second current supplied to the second battery 282 even if the second current limiter 285 does not perform a function of limiting the second current, for example by controlling the FETs 286 and 287 to be fully turned on by the gate driver 290.

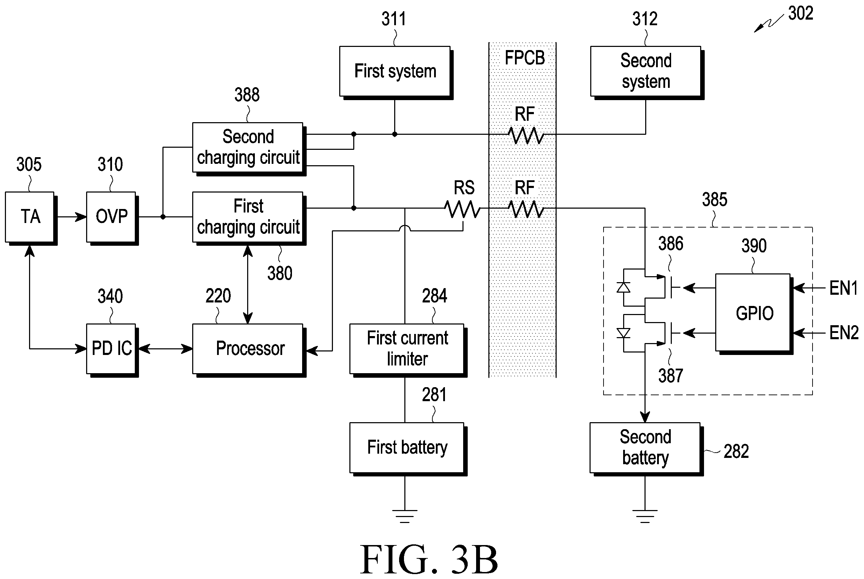

FIG. 3B illustrates an operation of controlling a current supplied to a second battery by an electronic device according to an embodiment.

Referring to FIG. 3B, an electronic device 302 according to an embodiment may include a second battery control circuit 385 instead of a second current limiter 285 compared to the electronic device 301 of FIG. 3A. The electronic device 302 of FIG. 3B may be implemented in the same manner as the electronic device 301 described in FIG. 3A except for the second battery control circuit 385. In comparison with the electronic device 301 of FIG. 3A, the second battery control circuit 385 may include a circuit different from the second current limiter 285. For example, the second battery control circuit 385 may include a P-type MOSFET and/or a GPIO.

According to an embodiment, the second battery control circuit 385 may not perform a function of limiting the second current supplied to the second battery 282. For example, the second battery control circuit 385 may not perform a function of limiting the second current supplied to the second battery 282 in a certain state, e.g. when no abnormal operation is being determined. However, upon determining the abnormal operation, the second battery control circuit 385 may perform a function of limiting the second current. For example, upon determining the abnormal operation, the second battery control circuit 385 may turn off multiple FETs 386 and 387.

According to an embodiment, the second battery control circuit 285 may include multiple FETs 386 and 387 and a switch control circuit 390. The multiple FETs 386 and 387 may be implemented as P-type FETs disposed in different directions. For example, the multiple FETs 386 and 387 may be implemented as P-type FETs in a back-to-back form.

According to an embodiment, the switch control circuit 390 may control on/off of the multiple FETs 386 and 387 under the control of the processor 220. In other words, the switch control circuit 390 may switch on or switch of the multiple FETs 386 and 387. The switch control circuit 390 may be configured to control on/off of each of the multiple FETs 386 and 387 based on a charging phase (e.g., pre-charging phase, charging phase, full charging phase) of the second battery 282. For example, the control circuit 290 may be configured to turn on or off each of the multiple FETs 386 and 387 based on a first enable signal (EN1) and a second enable signal (EN2) received from the processor 220. The processor 220 may send said enable signals (EN1, EN2) depending on a current charging phase.

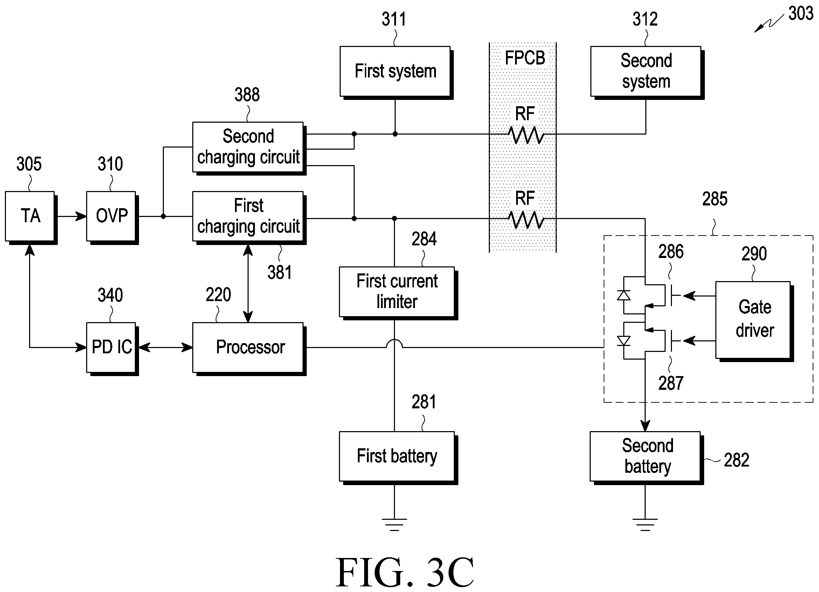

FIG. 3C illustrates an operation of controlling a current supplied to a second battery by an electronic device according to an embodiment.

Referring to FIG. 3C, an electronic device 303 according to an embodiment may not include a resistor (RS) when compared to the electronic device 301 of FIG. 3A. The electronic device 303 may be implemented in the same manner as the electronic device 301 described in FIG. 3A except for the first charging circuit 380 of FIG. 3A.

According to an embodiment, the first charging circuit 381 may be implemented in the same manner as the first charging circuit 380 of FIG. 3A.

According to an embodiment, the processor 220 may be configured to identify the second current (or the magnitude of the second current) supplied to the second battery 282. For example, the processor 220 may be configured to identify the second current through the second current limiter 285. In other words, the processor 220 may be configured to determine the magnitude of the second current supplied to the second batters 282 and/or the second current through the second current limiter.

According to an embodiment, the processor 220 may be configured to identify whether the second current (or the magnitude of the second current) exceeds the second threshold current. When it is determined that the second current exceeds the second threshold current, the processor 220 may be configured to transmit, to the PD IC 340, a message instructing to reduce the magnitude of a current supplied from the power transmitter 305 to the charging circuit 280. The PD IC 340 may reduce the magnitude of the current or voltage received from the power transmitter 305 based on the message. Accordingly, the electronic device 201 may be configured to adjust (or decrease) the magnitude of the second current supplied to the second battery 282 even if the second current limiter 285 does not perform a function of limiting the second current, for example by controlling the FETs 286 and 287 to be fully turned on by the gate driver 290.

According to an embodiment, the processor 220 may be configured to transmit information about the second current to the first charging circuit 381. Thereafter, the first charging circuit 381 may identify whether the second current (or the magnitude of the second current) exceeds the second threshold current. When the second current exceeds the second threshold current of the second battery 282, the first charging circuit 381 may reduce the magnitude of the second current under the control of the processor 220. For example, the first charging circuit 381 may increase the internal resistance of the first charging circuit 381 to reduce the magnitude of the second current provided from the charging circuit 280 to the second battery 282.

According to an embodiment, the processor 220 may be configured to identify whether the second current (or the magnitude of the second current) exceeds the second threshold current and, when it is identified that the second current exceeds the second threshold current, the processor may be configured to transmit the corresponding information to the first charging circuit 381. Thereafter, the charging circuit 280 may increase the internal resistance of the charging circuit 280 under the control of the processor 220 to increase the magnitude of the second current provided from the charging circuit 280 to the second battery 282.

Accordingly, the electronic device 303 may be configured to adjust (or decrease) the magnitude of the second current provided to the second battery 282, using the charging circuit 280 or the processor 220 without adding a separate resistor on the second path.

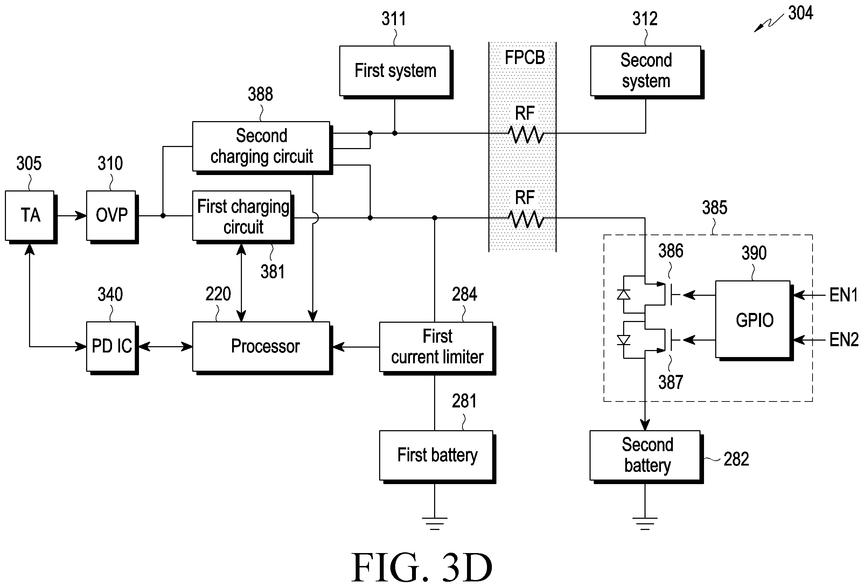

FIG. 3D illustrates an operation of controlling a current supplied to a second battery by an electronic device according to an embodiment.

Referring to FIG. 3D, the electronic device 304 according to an embodiment may include a second battery control circuit 385 instead of the second current limiter 285 compared to the electronic device 303 of FIG. 3C. In comparison with the electronic device 303 of FIG. 3C, the second battery control circuit 385 may include a circuit different from the second current limiter 285. For example, the second battery control circuit 385 may include a P-type MOSFET and/or a GPIO.

According to an embodiment, a first charging circuit 381 may be implemented in the same manner as the first charging circuit 380 of FIG. 3B. The processor 220 may be configured to identify a second current (or the magnitude of a second current) supplied to the second battery 282.

According to an embodiment, the processor 220 may be configured to obtain and identify information about a current generated through a first charging circuit 381 from a second charging circuit 388 (or the first charging circuit 381). For example, the current generated through the first charging circuit 381 may correspond to the sum of a first current supplied to the first battery 281 and a second current supplied to the second battery 282. The processor 220 may be configured to obtain and identify a first current through a first current limiter 284. The processor may be configured to identify or determine the second current (or the magnitude of the second current) based on the current, which is generated through the first charging circuit 381 and identified through the second charging circuit 388, and the first current identified through the first current limiter 284. For example, the processor 220 may subtract the first current identified through the first current limiter 284 from the current, which is generated by the first charging circuit 381.

According to an embodiment, a method for adjusting the magnitude of the second current by the electronic device 304 may be implemented in the same manner as the method for adjusting the magnitude of the second current by the electronic device 303 of FIG. 3C. For example, the processor 220 may be configured to compare the second current, having been identified or determined according to the above method, with the second threshold current. When it is identified that the second current exceeds the second threshold current, the processor 220 may be configured to perform an operation of adjusting (or reducing) the magnitude of the second current. Alternatively, the processor 220 may be configured to transmit information about the second current to the first charging circuit 381 so that the first charging circuit 381 adjusts the second current.

Accordingly, the electronic device 304 may be configured to adjust (or decrease) the magnitude of the second current provided to the second battery 282, using the charging circuit 280 or the processor 220.

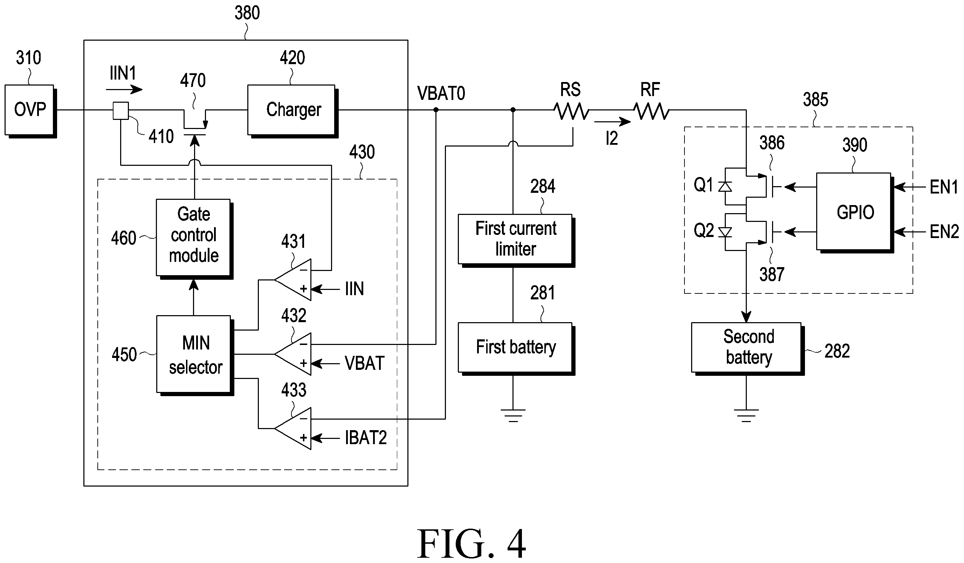

FIG. 4 illustrates an operation of controlling a current supplied to a second battery by a charging circuit according to an embodiment.

Referring to FIG. 4, a first charging circuit 380 according to an embodiment may include a current sensor 410, a charger 420, a charging circuit controller 430, and an FET element 470.

According to an embodiment, the current sensor 410 may sense a current (IIN1) corresponding to power supplied through the OVP 310.

According to an embodiment, the charger 420 may generate power to be supplied to the first battery 281 and the second battery 282 based on the power supplied through the OVP 310. The charger 420 may generate power of a current corresponding to the sum of a first threshold current of the first battery 281 and a second threshold current of the second battery 282. For example, the charger may be implemented as a direct charger.

According to an embodiment, the charging circuit controller 430 may be configured to adjust the magnitude of power supplied to the charger 420 through the FET element 470. For example, the charging circuit controller 430 may be configured to output a signal for controlling the resistance of the FET element 470 to the FET element 470. The charging circuit controller 430 may be configured to increase or decrease the resistance of the FET element 470 to increase or reduce the magnitude of power supplied to the charger 420. For example, the charging circuit control unit 430 may reduce the magnitude of the second current supplied to the second battery 282 by reducing the magnitude of the power supplied to the charger 420. Meanwhile, FIG. 4 illustrates that the FET element 470 is included in the first charging circuit 380, but the technical spirit of the disclosure may not be limited thereto. For example, the FET element 470 may be configured as a part of the OVP 310.

According to an embodiment, the charging circuit controller 430 may include a first error amplifier 431, a second error amplifier 432, a third error amplifier 433, a MIN selector 450, and a gate control circuit 460.

According to an embodiment, the first error amplifier 431 may compare a current (IIN1) sensed through the current sensor 410 with a designated current (IIN) and output a first signal for a result of the comparison. For example, the first signal may be determined based on a difference between the sensed current (IIN1) and the designated current (IIN). For example, the designated current may correspond to the sum of a first threshold current of the first battery 281 and a second threshold current of the second battery 282.

According to an embodiment, the second error amplifier 432 may compare a voltage (VBAT0) of power output from the charger 420 with a designated battery voltage (VBAT) and output a second signal for a result of the comparison. For example, the second signal may be determined based on a difference between the voltage (VBAT0) of power output from the charger 420 and the designated battery voltage (VBAT).

According to an embodiment, the third error amplifier 433 may compare a second current (I2) supplied to the second battery 282 with a second threshold current (IBAT2) of the second battery and output a third signal for a result of the comparison. For example, the third signal may be determined based on a difference between the second current (I2) and the second threshold current (IBAT2).

According to an embodiment, the MIN selector 450 may output one of the first signal, the second signal, and the third signal to the gate control circuit 460. The MIN selector 450 may output a signal having the smallest value among the first signal, the second signal, and the third signal. For example, the MIN selector 450 may output the third signal when the second current (I2) exceeds the second threshold current (IBAT2).

According to an embodiment, the gate voltage circuit 460 may output a gate voltage to the FET element 470 based on a signal output from the MIN selector 450. For example, the gate voltage circuit 460 may output a gate voltage based on the third signal when the second current (I2) exceeds the second threshold current (IBAT2). The resistance value of the FET element 470 may be changed based on the gate voltage. For example, when the second current (I2) exceeds the second threshold current (IBAT2), the FET element 470 may have a resistance value increased based on the difference between the second current (I2) and the second threshold current (IBAT2).

Accordingly, the electronic device 301 or 302 may be configured to adjust (or decrease) the magnitude of the second current provided to the second battery 282 without the current limiter of the second battery.

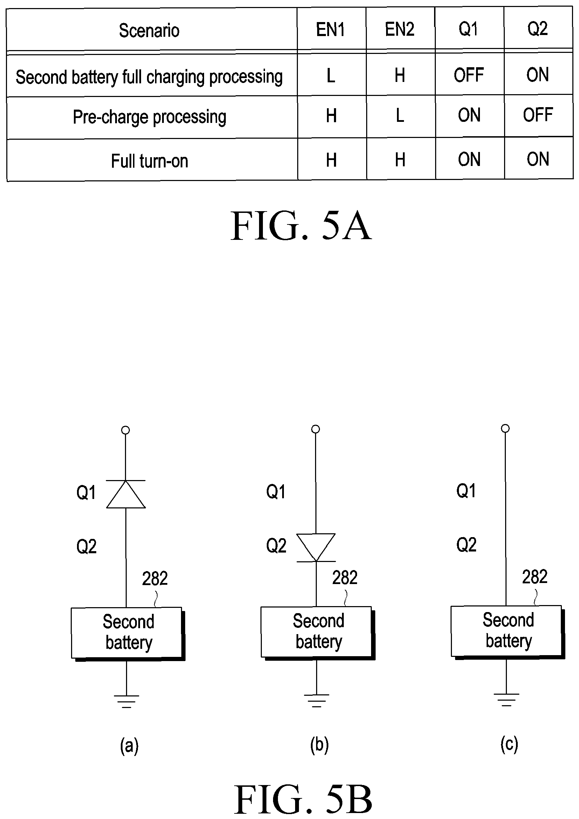

FIGS. 5A and 5B illustrate a method for controlling multiple elements disposed on a path for supplying power to a second battery according to an embodiment.

Referring to FIGS. 3B, 3D, 4, 5A, and 5B, the electronic devices 302 and 304 according to an embodiment may each include a second battery control circuit 385 instead of the second current limiter 285 for controlling the second current of the second battery 282.

Referring to FIG. 5A, according to an embodiment, the processor 220 may be configured to control multiple FET elements (Q1 and Q2) 386 and 387 included in the second battery control circuit 385 according to the state of charge of the second battery 282. The processor 220 may be configured to output a first enable signal (EN1) and a second enable signal (EN2) to a gate control circuit 390 so as to control turning on/off the multiple FET elements (Q1 and Q2) 386 and 387.

According to an embodiment, the processor 220 may be configured to output a first enable signal (EN1) of low level (L) and a second enable signal (EN2) of high level (H) in a state in which the second battery 282 is fully charged. The gate control circuit 390 may be configured to control the first FET (Q1) 386 to be turned off and control the second FET (Q2) 387 to be turned on, based on the first enable signal (EN1) of low level (L) and the second enable signal (EN2) of high level (H). For example, the first FET (Q1) 386 and the second FET (Q2) 387 may be equivalently represented as shown in (a) of FIG. 5B. The second battery 282 may be discharged through the first FET (Q1) 386 and the second FET (Q2) 387 in a fully charged state.

According to an embodiment, the processor 220 may be configured to output a first enable signal (EN1) of high level (H) and a second enable signal (EN2) of low level (L) in a state in which the second battery 282 is pre-charged. The gate control circuit 390 may be configured to control the first FET (Q1) 386 to be turned on and control the second FET (Q2) 387 to be turned off, based on the first enable signal (EN1) of high level (L) and the second enable signal (EN2) of low level (H). For example, the first FET (Q1) 386 and the second FET (Q2) 387 may be equivalently represented as shown in (b) of FIG. 5B. The second battery 282 may be charged based on power lower than a designated voltage through the first FET (Q1) 386 and the second FET (Q2) 387 in a pre-charged state.

According to an embodiment, the processor 220 may be configured to output a first enable signal (EN1) of high level (H) and a second enable signal (EN2) of high level (H) in a state in which the second battery 282 is fully turned on (or in a charging state). The gate control circuit 390 may be configured to control both the first FET (Q1) 386 and the second FET (Q2) 387 to be turned on, based on the first enable signal (EN1) of high level (H) and the second enable signal (EN2) of high level (H). For example, the first FET (Q1) 386 and the second FET (Q2) 387 may be equivalently represented as shown in (c) of FIG. 5B. The second battery 282 may receive and store power supplied from the charging circuits 380 and 381 through the first FET (Q1) 386 and the second FET (Q2) 387 in a fully turned-on state.

Meanwhile, at least some of the operations of the first charging circuit 380 described below may be controlled by the processor 220.

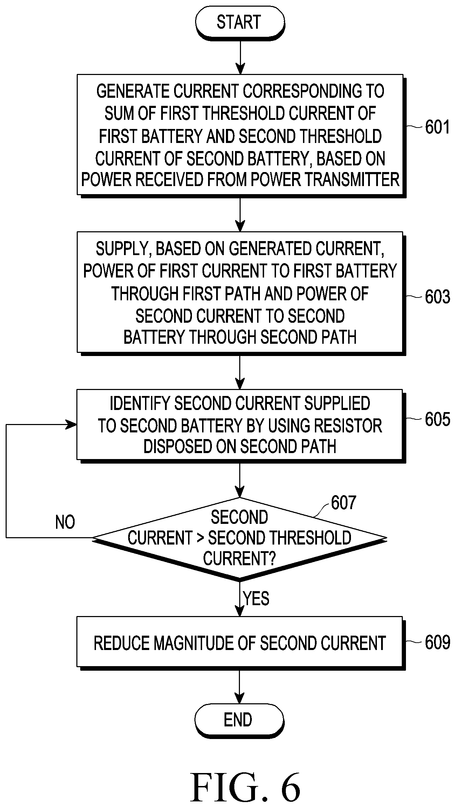

FIG. 6 is a flowchart illustrating a method for controlling a current supplied to a second battery by an electronic device according to an embodiment.

Referring to FIG. 6, according to an embodiment, in operation 601, the first charging circuit 380 may be configured to generate a current corresponding to the sum of a first threshold current of the first battery 281 and a second threshold current of the second battery 282, based on power received from an external power transmitter (e.g., TA 305 of FIG. 3).

According to an embodiment, in operation 603, the first charging circuit 380 may be configured to supply, based on the generated current, power of a first current to the first battery 281 through a first path and power of a second current to the second battery 282 through a second path. For example, the first charging circuit 380 may be configured to supply power to at least one of the first battery 281 and the second battery 282 according to the state of charge of the first battery 281 and the second battery 282.

According to an embodiment, in operation 605, the processor 220 may be configured to identify the second current supplied to the second battery by using a resistor disposed on the second path. The first charging circuit 380 may be configured to compare the second current with the second threshold current allowed for the second battery 282. Depending on implementation, the first charging circuit 380 may be configured to perform operation 605 without control of the processor 220 or without being controlled by the processor 220. For example, the first charging circuit 380 may be configured to identify the second current supplied to the second battery by using a resistor disposed on the second path. The first charging circuit 380 may be configured to compare the second current with the second threshold current allowed for the second battery 282.

According to an embodiment, when it is identified that the second current does not exceed the second threshold current ('No' in operation 607), the processor 220 may be configured to continuously perform identification of the second current. In addition, the processor 220 may be configured to compare the second current with the second threshold current allowed for the second battery 282. Depending on implementation, the first charging circuit 380 may be configured to perform operation 607 without control of the processor 220 or without being controlled by the processor 220.

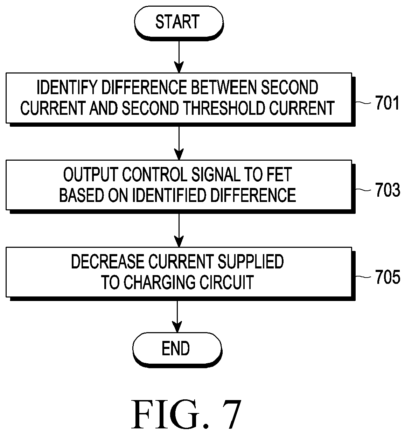

According to an embodiment, when it is identified that the second current exceeds the second threshold current ('Yes' in operation 607), the first charging circuit 380 may be configured to reduce the magnitude of the second current supplied to the second battery 282 under the control of the processor 220 in operation 609. For example, the first charging circuit 380 may be configured to supply power having a lower current than before to the second battery 282 by increasing internal resistance of the first charging circuit 380. Depending on implementation, the first charging circuit 380 may be configured to perform operation 609 without control of the processor 220 or without being controlled by the processor 220. In FIG. 7 below, a method for reducing the magnitude of the second current supplied to the second battery 282 by the first charging circuit 380 will be described in detail.

Accordingly, the electronic devices 301 and 302 each may be configured to control the second current supplied to the second battery 282 to be smaller than or equal to the second threshold current by using the first charging circuit 380.

FIG. 7 is a flowchart illustrating a method for controlling a current supplied to a second battery by an electronic device according to an embodiment.

Referring to FIG. 7, according to an embodiment, in operation 701, the processor 220 may be configured to identify a difference between a second current and a second threshold current. For example, the processor 220 may be configured to output a signal based on the difference between the second current and the second threshold current through the error amplifier 433 and the MIN selector 450. Depending on implementation, the first charging circuit 380 may be configured to perform operation 701 without control of the processor 220 or without being controlled by the processor 220. For example, the first charging circuit 380 may output a signal based on the difference between the second current and the second threshold current through the error amplifier 433 and the MIN selector 450.

According to an embodiment, in operation 703, the processor 220 may be configured to control the first charging circuit 380 to apply a control signal to a FET element (e.g., the FET element 470 of FIG. 4) based on the identified difference. For example, the first charging circuit 380 may be configured to output, to the FET element 470, a gate voltage corresponding to a signal based on the difference between the second current and the second threshold current, through the error amplifier 433 and the MIN selector 450. The resistance of the FET element 470 may be increased based on the control signal (or gate voltage).

According to an embodiment, in operation 705, a current supplied to the first charging circuit 380 (or the charger (e.g., the charger 420 of FIG. 4)) may be decreased. For example, as the resistance of the FET element 470 increases, the current supplied to the charger 420 included in the first charging circuit 380 may decrease. As the current supplied to the charger 420 decreases, the first charging circuit 380 (or, the charger 420) may supply power having a lower current than before to the second battery 282.

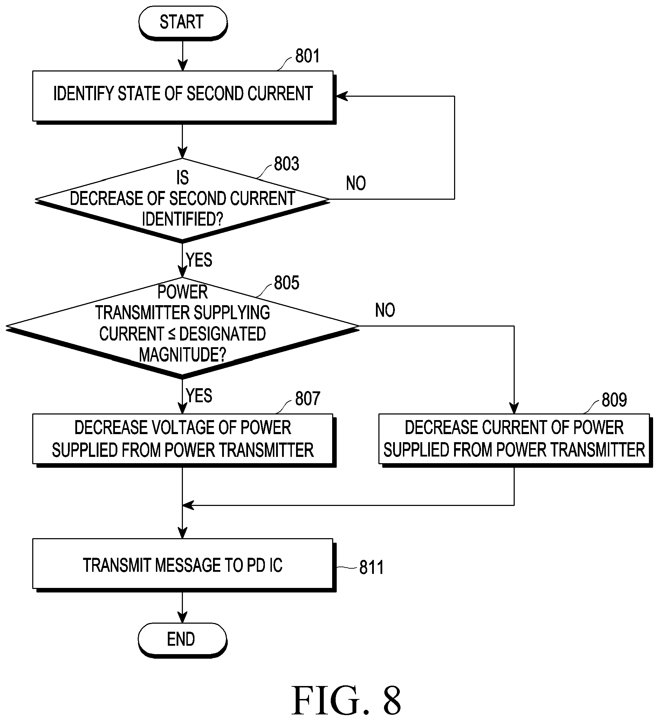

FIG. 8 is a flowchart illustrating a method for controlling a current supplied to a second battery by a processor according to an embodiment.

Referring to FIG. 8, according to an embodiment, in operation 801, the processor 220 may be configured to identify the state of the second current. For example, the processor 220 may be configured to receive and identify information on the state of the second current from the first charging circuit 380 through IC2 communication.

According to an embodiment, in operation 803, the processor 220 may be configured to identify that an operation, in which the second current supplied to the second battery 282 by the first charging circuit 380 is decreased, is performed. For example, the processor 380 may be configured to identify that the resistance of a FET element (e.g., the FET element 470) included in the first charging circuit 380 is increased or that the MIN selector 450 selects a third signal. When the charging circuit 280 increases the resistance of the FET element 470, heat generation of the charging circuit 280 may increase. Accordingly, the processor 220 may be configured to transmit a message to the power transmitter 305 so as to reduce the magnitude of power provided from the external power transmitter (e.g., the TA 305).

According to an embodiment, in operation 805, the processor 220 may be configured to identify whether the supply current of the power transmitter 305 is smaller than or equal to a designated magnitude (e.g., 1A). For example, the designated magnitude may imply a minimum current that the power transmitter 305 is able to control.

According to an embodiment, when it is determined that the supply current of the power transmitter 305 is smaller than or equal to a designated magnitude (e.g., 1A) ('Yes' in operation 805), the processor 220 may be configured to determine to decrease the voltage of the power supplied from the power transmitter 305 in operation 807. Here, the magnitude of the current may also be reduced due to the decrease of the voltage.

According to an embodiment, when it is determined that the supply current of the power transmitter 305 is greater than a designated magnitude (e.g., 1A) ('No' in operation 805), the processor 220 may be configured to determine to decrease the current of the power supplied from the power transmitter 305 in operation 809.

According to an embodiment, in operation 811, the processor 220 may be configured to transmit a message based on the determination through the PD IC 340. The power transmitter 305 may be configured to supply power having a current or voltage reduced based on the message to the first charging circuit 380.

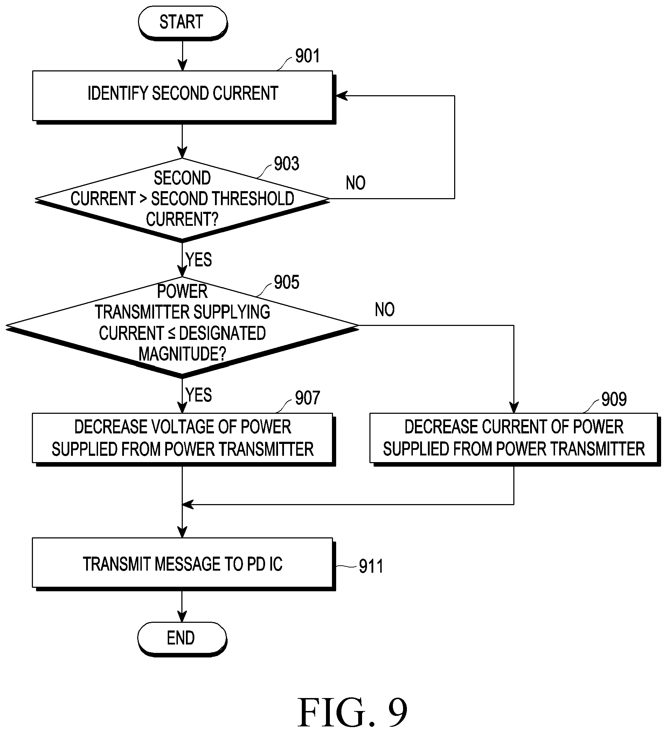

FIG. 9 is a flowchart illustrating a method for controlling a current supplied to a second battery by a processor according to an embodiment.

Referring to FIG. 9, according to an embodiment, in operation 901, the processor 220 may be configured to identify or monitor a second current. For example, the processor 220 may be configured to obtain information on the second current, for example, the magnitude of the second current, from the second current limiter 285 through IC2 communication. Alternatively, the processor 220 may be configured to obtain information about a total current and a first current from the second charging circuit 388 (or the first charging circuit 381) and the first current limiter 285 through IC2 communication, and to identify a second current based on the obtained information.

According to an embodiment, in operation 903, the processor 220 may be configured to compare the second current with a second threshold current allowed for the second battery 282. When it is identified that the second current does not exceed the second threshold current ('No' in operation 903), the processor 220 may be configured to continuously identify or monitor the second current.

According to an embodiment, when it is identified that the second current exceeds the second threshold current ('Yes' in operation 903), the processor 220 may be configured to identify whether the supply current of the power transmitter 305 is smaller than or equal to a designated magnitude (e.g., 1A) in operation 905.

According to an embodiment, when it is determined that the supply current of the power transmitter 305 is smaller than or equal to a designated magnitude (e.g., 1A) ('Yes' in operation 905), the processor 220 may be configured to determine to decrease the voltage of the power supplied from the power transmitter 305 in operation 907. Here, the magnitude of the current may also be reduced due to the decrease of the voltage.

According to an embodiment, when it is determined that the supply current of the power transmitter 305 is greater than a designated magnitude (e.g., 1A) ('No' in operation 905), the processor 220 may be configured to determine to decrease the current of the power supplied from the power transmitter 305 in operation 909.

According to an embodiment, in operation 911, the processor 220 may be configured to transmit a message based on the determination through the PD IC 340. The power transmitter 305 may be configured to supply power having a current or voltage reduced based on the message to the first charging circuit 380.

Accordingly, the electronic devices 303 and 304 each may be configured to control the second current supplied to the second battery 282 to be smaller than or equal to the second threshold current by using the processor 220.

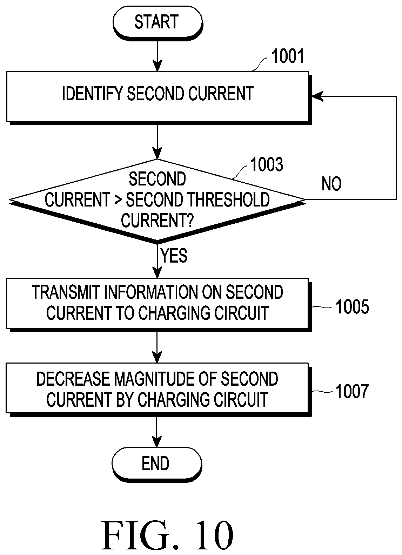

FIG. 10 is a flowchart illustrating a method for controlling a current supplied to a second battery by a processor according to an embodiment.

Referring to FIG. 10, according to an embodiment, in operation 1001, the processor 220 may be configured to identify a second current. For example, the processor 220 may be configured to obtain information on the second current from the second current limiter 285 through IC2 communication. Alternatively, the processor 220 may be configured to obtain information about a total current and a first current from the second charging circuit 388 (or the first charging circuit 381) and the first current limiter 285 through IC2 communication, and to identify or monitor the second current based on the obtained information.

According to an embodiment, in operation 1003, the processor 220 may be configured to compare the second current with a second threshold current allowed for the second battery 282. When it is identified that the second current does not exceed the second threshold current ('No' in operation 1003), the processor 220 may be configured to continuously identify or monitor the second current.

According to an embodiment, when it is determined that the second current exceeds the second threshold current ('Yes' in operation 1003), the processor 220 may be configured to transmit information on the second current to the first charging circuit 381 in operation 1005.

In operation 1007, the first charging circuit 381 may be configured to reduce the magnitude of the second current supplied to the second battery 282, based on the information on the second current received from the processor 220. Thereafter, the processor 220 may be configured to decrease the voltage and/ or current of power supplied from the power transmitter 305 according to the operation described in FIG. 8.

Accordingly, the electronic devices 303 and 304 each may be configured to control the second current supplied to the second battery 282 to be smaller than or equal to the second threshold current by using the processor 220 and the first charging circuit 381. In addition, the electronic devices 303 and 304 each may be configured to minimize heat generation and increase charging efficiency.

An electronic device 201, 301, 302 according to an embodiment may include a first battery 281, a second battery 282, a charging circuit 380, 381 configured to supply power to the first battery through a first path and supply power to the second battery through a second path, and a processor 220. According to an embodiment, the processor may be configured to control the charging circuit to generate a current corresponding to a sum of a first threshold current of the first battery and a second threshold current of the second battery based on power received from a power transmitter 305. According to an embodiment, the processor may be configured to, based on the current, control the charging circuit to supply a first current to the first battery through a first path and a second current to the second battery through a second path. According to an embodiment, the processor may be configured to identify the second current supplied to the second battery through the second path. According to an embodiment, the processor may be configured to, based on identifying that the second current exceeds the second threshold current, control the charging circuit so as to reduce the magnitude of the second current supplied to the second battery.

The first battery and the second battery according to an embodiment may be connected by a flexible printed circuit board (FPCB).

The processor according to an embodiment may be configured to control the charging circuit to apply, based on the difference between the second current and the second threshold current, a control signal to an element 470 disposed on a path through which power is supplied from the power transmitter to the charging circuit so that the resistance of the path increases.

The electronic device according to an embodiment may further include a current limiter 285 including two N-type field effect transistors (FETs) disposed in different directions on the second path. The processor according to an embodiment may be configured to control both of the two N-type FETs to be turned on.

The electronic device according to an embodiment may further include a battery control circuit 385 including two P-type FETs disposed in different directions on the second path.

The processor according to an embodiment may be configured to, based on identifying that the second battery is identified to be fully charged, turn off a first FET and turn on a second FET among the two P-type FETs so as to stop charging the second battery.

The processor according to an embodiment may be configured to turn on a first FET and turn off a second FET among the two P-type FETs in a pre-charge period of the second battery.

The processor according to an embodiment may be configured to, based on identifying that a charging operation of the second battery starts, turn on both of the two P-type FETs to charge the second battery.

The processor according to an embodiment may be configured to, based on identifying that the second current supplied to the second battery is identified to exceed the second threshold current, control the power transmitter so that the magnitude of the second current is reduced to the second threshold current or less.

The processor according to an embodiment may be configured to, based on identifying that the magnitude of the current supplied from the power transmitter to the charging circuit is smaller than or equal to a designated magnitude, transmit a message for reducing the magnitude of the voltage, which is supplied from the power transmitter to the charging circuit, to a power delivery circuit 340 associated with the power transmitter.

The processor according to an embodiment may be configured to, based on identifying that the magnitude of the current supplied from the power transmitter to the charging circuit is greater than the designated magnitude, transmit a message for reducing the magnitude of the current, which is supplied from the power transmitter to the charging circuit, to the power delivery circuit 340 associated with the power transmitter.

A method for operating an electronic device 201, 301, 302 including a first battery 281 and a second battery 282 according to an embodiment may include controlling a charging circuit 380, 381 included in the electronic device so as to generate a current corresponding to a sum of a first threshold current of the first battery and a second threshold current of the second battery based on power received from a power transmitter 305. A method for operating the electronic device according to an embodiment may include controlling the charging circuit to supply, based on the current, a first current to the first battery through a first path and a second current to the second battery through a second path. The method for operating the electronic device according to an embodiment may include identifying the second current supplied to the second battery by using a resistor disposed on the second path. The method for operating the electronic device according to an embodiment may include controlling, based on identifying that the second current exceeds the second threshold current, the charging circuit so as to reduce the magnitude of the second current supplied to the second battery.

The reducing of the magnitude of the second current according to an embodiment may include controlling the charging circuit to apply, based on the difference between the second current and the second threshold current, a control signal to an element disposed on a path through which power is supplied from the power transmitter to the charging circuit so that the resistance of the path increases.

The method for operating the electronic device according to an embodiment may further include controlling both of two N-type FETs included in a current limiter 285 disposed on the second path to be turned on.

The electronic device according an embodiment may further include two P-type FETs disposed in different directions on the second path. The method for operating the electronic device according to an embodiment may include turning on a first FET and turning off a second FET among the two P-type FETs in a pre-charge period of the second battery. The method for operating the electronic device according to an embodiment may include turning on both of the two P-type FETs to charge the second battery based on identifying that a charging operation of the second battery starts. The method for operating the electronic device may include, based on identifying that the second battery is identified to be fully charged, turning off a first FET and turning on a second FET among the two P-type FETs so as to stop charging the second battery.

The method for operating the electronic device according to an embodiment may further include, based on identifying that the second current supplied to the second battery is identified to exceed the second threshold current, controlling the power transmitter so as to reduce the magnitude of the second current to the second threshold current or less.

The method for operating the electronic device according to an embodiment may further include transmitting a message for reducing the magnitude of the voltage, which is supplied from the power transmitter to the charging circuit, to a power delivery circuit 340 associated with the power transmitter based on identifying that the magnitude of the current supplied from the power transmitter to the charging circuit is smaller than or equal to a designated magnitude. The method for operating the electronic device according to an embodiment may further include transmitting a message for reducing the magnitude of the current, which is supplied from the power transmitter to the charging circuit, to the power delivery circuit 340 based on identifying that the magnitude of the current supplied from the power transmitter to the charging circuit is greater than the designated magnitude.

An electronic device 201, 303, 304 according to an embodiment may include a first battery 281, a second battery 282, a charging circuit 380, 381 configured to supply power to the first battery through a first path and supply power to the second battery through a second path, and a processor 220. The processor according to an embodiment may be configured to control the charging circuit to generate a current corresponding to a sum of a first threshold current of the first battery and a second threshold current of the second battery based on power received from a power transmitter. The processor according to an embodiment may be configured to control the charging circuit to supply a first current to the first battery through a first path and supply a second current to the second battery through a second path. The processor according to an embodiment may be configured to identify the second current supplied to the second battery through the second path. The processor according to an embodiment may be configured to, based on identifying that the second current supplied to the second battery exceeds the second threshold current, control the charging circuit or the power transmitter so as to reduce the magnitude of the current supplied to the charging circuit.

The processor according to an embodiment may be configured to, based on identifying that the second current supplied to the second battery exceeds the second threshold current, transmit a message to the power delivery circuit 340 so as to reduce the magnitude of the current supplied to the charging circuit.

The processor according to an embodiment may be configured to control the charging circuit to increase the resistance of a path through which power is supplied from the power transmitter to the charging circuit, based on information about a difference between the second current and the second threshold current.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above. It should be appreciated that embodiment(s) of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium (e.g., internal memory or external memory) that is readable by a machine (e.g., an electronic device). For example, a processor (e.g., a processor) of the machine (e.g., an electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (201, 301, 302) comprising:

   a first battery (281);
   a second battery (282);
   a charging circuit (380, 381) configured to supply power to the first battery (281) through a first path and supply power to the second battery (282) through a second path; and
   a processor (220),
   wherein the processor (220) is configured to:

   control the charging circuit (380, 381) to generate a current corresponding to a sum of a first threshold current of the first battery (281) and a second threshold current of the second battery (282), based on power received from a power transmitter (305);
   based on the current, control the charging circuit (380, 381) to supply a first current to the first battery (281) through a first path and a second current to the second battery (282) through a second path;
   identify the second current supplied to the second battery (282) through the second path; and
   control the charging circuit (380, 381) so as to reduce the magnitude of a second current supplied to the second battery (282) based on identifying that the second current exceeds the second threshold current.

2. The electronic device (201, 301, 302) of claim 1, wherein the first battery (281) and the second battery (282) are connected by a flexible printed circuit board, FPCB.

3. The electronic device ( 201, 301, 302) of one of claims 1 to 2, wherein the processor (220) is configured to control the charging circuit (380, 381) to apply, based on a difference between the second current and the second threshold current, a control signal to an element (470) disposed on a path through which power is supplied from the power transmitter to the charging circuit (380, 381) so that the resistance of the path increases.

4. The electronic device (201, 301, 302) of one of claims 1 to 3, further comprising a current limiter (285) including two N-type field effect transistors (FETs) disposed in different directions on the second path,
   wherein the processor (120, 220) is configured to control both of the two N-type FETs to be turned on.

5. The electronic device (201, 301, 302) of one of claims 1 to 4, further comprising a battery control circuit (385) including two P-type FETs disposed in different directions on the second path.

6. The electronic device (201, 301, 302) of one of claims 1 to 5, wherein the processor (120, 220) is configured to, based on identifying that the second battery (282) is identified to be fully charged, turn off a first FET and turn on a second FET among the two P-type FETs so as to stop charging the second battery (282).

7. The electronic device (201, 301, 302) of one of claims 1 to 6, wherein the processor (120, 220) is configured to turn on a first FET and turn off a second FET among the two P-type FETs in a pre-charge period of the second battery (282).

8. The electronic device (201, 301, 302) of one of claims 1 to 7, wherein the processor (120, 220) is configured to, based on identifying that a charging operation of the second battery (282) starts, turn on both of the two P-type FETs to charge the second battery (282).

9. The electronic device (201, 301, 302) of one of claims 1 to 8, wherein the processor (120, 220) is configured to, based on identifying that the second current supplied to the second battery (282) is identified to exceed the second threshold current, control the power transmitter so that the magnitude of the second current is reduced to the second threshold current or less.

10. The electronic device (201, 301, 302) of one of claims 1 to 9, wherein the processor (120, 220) is configured to, based on identifying that the magnitude of the current supplied from the power transmitter to the charging circuit (380, 381) is smaller than or equal to a designated magnitude, transmit a message for reducing the magnitude of the voltage, which is supplied from the power transmitter to the charging circuit (380, 381), to a power delivery circuit (340) associated with the power transmitter.

11. The electronic device (201, 301, 302) of one of claims 1 to 10, wherein the processor (120, 220) is configured to, based on identifying that the magnitude of the current supplied from the power transmitter to the charging circuit (380, 381) is greater than the designated magnitude, transmit a message for reducing the magnitude of the current, which is supplied from the power transmitter to the charging circuit (380, 381), to the power delivery circuit (340) associated with the power transmitter.

12. A method for operating an electronic device (201, 301, 302) comprising a first battery (281) and a second battery (282), the method comprising:

controlling a charging circuit (380, 381) included in the electronic device (201, 301, 302) to generate a current corresponding to a sum of a first threshold current of the first battery (281) and a second threshold current of the second battery (282), based on power received from a power transmitter (305);
based on the current, controlling the charging circuit (380, 381) to supply a first current to the first battery (281) through a first path and a second current to the second battery (282) through a second path;
identifying the second current supplied to the second battery (282) by using a resistor disposed on the second path; and
controlling the charging circuit (380, 381) so as to reduce the magnitude of the second current supplied to the second battery (282) based on identifying that the second current exceeds the second threshold current.

13. The method of claim 12, wherein the reducing of the magnitude of the second current comprises controlling the charging circuit (380, 381) to apply, based on a difference between the second current and the second threshold current, a control signal to an element disposed on a path through which power is supplied from the power transmitter to the charging circuit (380, 381) so that the resistance of the path increases.

14. The method of one of claims 12 to 13, further comprising controlling both of two N-type field effect transistors (FETs) to be turned on, the two FETs disposed in different directions and included in a current limiter (285) disposed on the second path.

15. The method of one of claims 12 to 14, wherein the electronic device (201, 301, 302) further comprises two P-type FETs disposed in different directions on the second path, and
wherein the method comprises:

turning on a first FET and turning off a second FET among the two P-type FETs in a pre-charge period of the second battery (282);
based on identifying that a charging operation of the second battery (282) starts, turning on both of the two P-type FETs to charge the second battery (282); and
based on identifying that the second battery (282) is identified to be fully charged, turning off the first FET and turning on the second FET among the two P-type FETs so as to stop charging the second battery (282).

FIG. 1

EP 4 372 959 A1

201

FIG. 2

FIG. 3A

FIG. 3B

FIG. 3C

FIG. 3D

FIG. 4

EP 4 372 959 A1

| Scenario | EN1 | EN2 | Q1 | Q2 |
|---|---|---|---|---|
| Second battery full charging processing | L | H | OFF | ON |
| Pre-charge processing | H | L | ON | OFF |
| Full turn-on | H | H | ON | ON |

# FIG. 5A

Q1
Q2
282
Second battery
(a)

Q1
Q2
282
Second battery
(b)

Q1
Q2
282
Second battery
(c)

# FIG. 5B

START

GENERATE CURRENT CORRESPONDING TO SUM OF FIRST THRESHOLD CURRENT OF FIRST BATTERY AND SECOND THRESHOLD CURRENT OF SECOND BATTERY, BASED ON POWER RECEIVED FROM POWER TRANSMITTER — 601

SUPPLY, BASED ON GENERATED CURRENT, POWER OF FIRST CURRENT TO FIRST BATTERY THROUGH FIRST PATH AND POWER OF SECOND CURRENT TO SECOND BATTERY THROUGH SECOND PATH — 603

IDENTIFY SECOND CURRENT SUPPLIED TO SECOND BATTERY BY USING RESISTOR DISPOSED ON SECOND PATH — 605

SECOND CURRENT > SECOND THRESHOLD CURRENT? — 607

NO

YES

REDUCE MAGNITUDE OF SECOND CURRENT — 609

END

FIG. 6

START

IDENTIFY DIFFERENCE BETWEEN SECOND
CURRENT AND SECOND THRESHOLD CURRENT ~ 701

OUTPUT CONTROL SIGNAL TO FET
BASED ON IDENTIFIED DIFFERENCE ~ 703

DECREASE CURRENT SUPPLIED
TO CHARGING CIRCUIT ~ 705

END

FIG. 7

START

IDENTIFY STATE OF SECOND CURRENT — 801

IS
DECREASE OF SECOND CURRENT
IDENTIFIED? — 803 → NO

YES

POWER
TRANSMITTER SUPPLYING
CURRENT ≤ DESIGNATED
MAGNITUDE? — 805 → NO

YES

DECREASE VOLTAGE OF POWER
SUPPLIED FROM POWER TRANSMITTER — 807

DECREASE CURRENT OF POWER
SUPPLIED FROM POWER TRANSMITTER — 809

TRANSMIT MESSAGE TO PD IC — 811

END

FIG. 8

START

IDENTIFY SECOND CURRENT ⟋901

SECOND CURRENT > SECOND THRESHOLD CURRENT? ⟋903 — NO

YES

POWER TRANSMITTER SUPPLYING CURRENT ≤ DESIGNATED MAGNITUDE? ⟋905 — NO

YES

DECREASE VOLTAGE OF POWER SUPPLIED FROM POWER TRANSMITTER ⟋907

DECREASE CURRENT OF POWER SUPPLIED FROM POWER TRANSMITTER ⟋909

TRANSMIT MESSAGE TO PD IC —911

END

FIG. 9

START

IDENTIFY SECOND CURRENT ~1001

SECOND
CURRENT > SECOND THRESHOLD ~1003
CURRENT?

NO

YES

TRANSMIT INFORMATION ON SECOND
CURRENT TO CHARGING CIRCUIT ~1005

DECREASE MAGNITUDE OF SECOND
CURRENT BY CHARGING CIRCUIT ~1007

END

FIG. 10

## INTERNATIONAL SEARCH REPORT

| International application No. |
| --- |
| **PCT/KR2023/014835** |

| A. | CLASSIFICATION OF SUBJECT MATTER |
| --- | --- |
| | **H02J 7/00**(2006.01)i; **H01M 50/284**(2021.01)i |

According to International Patent Classification (IPC) or to both national classification and IPC

| B. | FIELDS SEARCHED |
| --- | --- |

Minimum documentation searched (classification system followed by classification symbols)

H02J 7/00(2006.01); H01M 10/42(2006.01); H02H 9/00(2006.01); H02H 9/02(2006.01); H02J 7/02(2006.01); H02J 7/34(2006.01); H02J 9/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 충전(charging), 전류(current), 제어(control)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X<br>Y | KR 10-2019-0001830 A (SAMSUNG ELECTRONICS CO., LTD.) 07 January 2019 (2019-01-07)<br>See paragraphs [0027]-[0094]; claims 1-17; and figures 1a-5. | 1-3,12-13<br><br>14 |
| Y | KR 10-2012-0037682 A (SAMSUNG SDI CO., LTD.) 20 April 2012 (2012-04-20)<br>See paragraph [0057]; and figure 2. | 14 |
| A | US 2014-0145506 A1 (HTC CORPORATION) 29 May 2014 (2014-05-29)<br>See claims 1-2. | 1-3,12-14 |
| A | KR 10-2018-0099440 A (YURA CORPORATION CO., LTD.) 05 September 2018 (2018-09-05)<br>See entire document. | 1-3,12-14 |
| A | KR 10-2005-0070127 A (SEMICONDUCTOR COMPONENTS INDUSTRIES, L.L.C.) 05 July 2005 (2005-07-05)<br>See entire document. | 1-3,12-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 January 2024** | **03 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/014835**

| Box No. II | Observations where certain claims were found unsearchable (Continuation of item 2 of first sheet) |
| --- | --- |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☑ Claims Nos.: **4-11, 15**
   because they are dependent claims and are not drafted in accordance with the second and third sentences of Rule 6.4(a).

Form PCT/ISA/210 (continuation of first sheet) (July 2022)

# EP 4 372 959 A1

<table>
<tr><td colspan="2" align="center">INTERNATIONAL SEARCH REPORT<br>Information on patent family members</td><td colspan="2">International application No.<br><br>**PCT/KR2023/014835**</td></tr>
</table>

| Patent document cited in search report | Publication date (day/month/year) | Patent family member(s) | | Publication date (day/month/year) |
|---|---|---|---|---|
| KR 10-2019-0001830 A | 07 January 2019 | CN | 109149682 A | 04 January 2019 |
| | | EP | 3422529 A1 | 02 January 2019 |
| | | EP | 3422529 B1 | 25 October 2023 |
| | | KR | 10-2382003 B1 | 04 April 2022 |
| | | US | 11133535 B2 | 28 September 2021 |
| | | US | 2019-0006722 A1 | 03 January 2019 |
| KR 10-2012-0037682 A | 20 April 2012 | KR | 10-1182431 B1 | 12 September 2012 |
| | | US | 2012-0086399 A1 | 12 April 2012 |
| | | US | 8963499 B2 | 24 February 2015 |
| US 2014-0145506 A1 | 29 May 2014 | CN | 103840512 A | 04 June 2014 |
| | | CN | 103840512 B | 17 May 2017 |
| | | US | 9882403 B2 | 30 January 2018 |
| KR 10-2018-0099440 A | 05 September 2018 | CN | 110114904 A | 09 August 2019 |
| | | CN | 110114904 B | 15 July 2022 |
| | | CN | 110114905 A | 09 August 2019 |
| | | CN | 110114905 B | 24 June 2022 |
| | | CN | 110352513 A | 18 October 2019 |
| | | CN | 110352513 B | 19 April 2022 |
| | | EP | 3565021 A2 | 06 November 2019 |
| | | EP | 3565021 A4 | 28 October 2020 |
| | | EP | 3565022 A1 | 06 November 2019 |
| | | EP | 3565022 A4 | 11 March 2020 |
| | | EP | 3565022 B1 | 10 March 2021 |
| | | EP | 3591732 A1 | 08 January 2020 |
| | | EP | 3591732 A4 | 11 March 2020 |
| | | EP | 3591732 A9 | 01 April 2020 |
| | | EP | 3591732 B1 | 10 March 2021 |
| | | JP | 2020-504425 A | 06 February 2020 |
| | | JP | 2020-509545 A | 26 March 2020 |
| | | JP | 2020-514976 A | 21 May 2020 |
| | | JP | 6757856 B2 | 23 September 2020 |
| | | JP | 6869355 B2 | 12 May 2021 |
| | | JP | 6905071 B2 | 21 July 2021 |
| | | KR | 10-1844852 B1 | 03 April 2018 |
| | | KR | 10-1928065 B1 | 11 December 2018 |
| | | KR | 10-1928066 B1 | 11 December 2018 |
| | | KR | 10-1928073 B1 | 11 December 2018 |
| | | KR | 10-1996449 B1 | 03 July 2019 |
| | | KR | 10-2018-0076145 A | 05 July 2018 |
| | | KR | 10-2018-0076146 A | 05 July 2018 |
| | | KR | 10-2018-0077695 A | 09 July 2018 |
| | | KR | 10-2018-0099437 A | 05 September 2018 |
| | | KR | 10-2018-0099438 A | 05 September 2018 |
| | | KR | 10-2018-0099439 A | 05 September 2018 |
| | | KR | 10-2019-0027096 A | 14 March 2019 |
| | | KR | 10-2019-0061378 A | 05 June 2019 |
| | | KR | 10-2032999 B1 | 17 October 2019 |
| | | KR | 10-2033001 B1 | 16 October 2019 |
| | | KR | 10-2033003 B1 | 16 October 2019 |
| | | KR | 10-2087699 B1 | 28 April 2020 |

**INTERNATIONAL SEARCH REPORT**
Information on patent family members

International application No.

**PCT/KR2023/014835**

| Patent document cited in search report | Publication date (day/month/year) | Patent family member(s) | | | Publication date (day/month/year) |
|---|---|---|---|---|---|
| | | KR | 10-2106344 | B1 | 04 May 2020 |
| | | US | 11217850 | B2 | 04 January 2022 |
| | | US | 11309593 | B2 | 19 April 2022 |
| | | US | 11376969 | B2 | 05 July 2022 |
| | | US | 2019-0348720 | A1 | 14 November 2019 |
| | | US | 2019-0389318 | A1 | 26 December 2019 |
| | | US | 2020-0014005 | A1 | 09 January 2020 |
| | | WO | 2018-124494 | A2 | 05 July 2018 |
| | | WO | 2018-124494 | A3 | 16 August 2018 |
| | | WO | 2018-124751 | A1 | 05 July 2018 |
| | | WO | 2018-159928 | A1 | 07 September 2018 |
| KR 10-2005-0070127 A | 05 July 2005 | CN | 100438252 | C | 26 November 2008 |
| | | CN | 1711665 | A | 21 December 2005 |
| | | JP | 2006-508628 | A | 09 March 2006 |
| | | JP | 4149441 | B2 | 10 September 2008 |
| | | KR | 10-0979086 | B1 | 31 August 2010 |
| | | US | 2004-0090726 | A1 | 13 May 2004 |
| | | US | 6865063 | B2 | 08 March 2005 |
| | | WO | 2004-045038 | A1 | 27 May 2004 |

Form PCT/ISA/210 (patent family annex) (July 2022)